(19) Europäisches Patentamt
European Patent Office
Office européen des brevets

(11) **EP 3 667 143 B1**

(12) **EUROPÄISCHE PATENTSCHRIFT**

(45) Veröffentlichungstag und Bekanntmachung des Hinweises auf die Patenterteilung:
**15.12.2021 Patentblatt 2021/50**

(51) Int Cl.:
**F16L 11/11** (2006.01)　　**F16L 11/12** (2006.01)
**F16L 11/15** (2006.01)

(21) Anmeldenummer: **19204250.5**

(22) Anmeldetag: **21.10.2019**

(54) **VERBUNDROHR FÜR KLIMA- UND LÜFTUNGSTECHNIK**

COMPOSITE PIPE FOR AIR CONDITIONING AND VENTILATION TECHNOLOGY

TUBE DE RACCORDEMENT POUR LA TECHNIQUE DE CLIMATISATION ET D'AÉRATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.12.2018 DE 102018221508**

(43) Veröffentlichungstag der Anmeldung:
**17.06.2020 Patentblatt 2020/25**

(73) Patentinhaber: **Hegler, Ralph Peter**
**97688 Bad Kissingen (DE)**

(72) Erfinder: **Hegler, Ralph Peter**
**97688 Bad Kissingen (DE)**

(74) Vertreter: **Rau, Schneck & Hübner**
**Patentanwälte Rechtsanwälte PartGmbB**
**Königstraße 2**
**90402 Nürnberg (DE)**

(56) Entgegenhaltungen:
**EP-A1- 2 620 683　　EP-A2- 2 431 642**
**DE-A1-102008 013 013**

**Beschreibung**

Die Erfindung betrifft ein Verbundrohr für Klima- und Lüftungstechnik nach dem Oberbegriff des Anspruches 1.

Bei einem derartigen aus der EP 2 431 642 A2 bekannten Verbundrohr ist einer der beiden großen Seitenwand-Abschnitte eben, d.h. flach, ausgebildet. Dieser große Seitenwand-Abschnitt dient als Auflagefläche. Die kleinen Seitenwand-Abschnitte gehen in einen diesen beiden gegenüber dem ebenen Seitenwand-Abschnitt angeordneten balligen, also nach außen gekrümmt ausgebildeten großen Seitenwand-Abschnitt über. Diese Ausgestaltung führt dazu, dass die Biegbarkeit um die große Achse stark eingeschränkt ist. Dies führt beim Biegen häufig zum Abknicken des Verbundrohres, was wiederum gesonderte Winkelstücke erfordert, wenn das Rohr um einen relativ engen Radius gebogen werden muss. Auch die Biegbarkeit um die kleine Achse ist eingeschränkt, sodass lediglich ein Abbiegen um große Biegeradien möglich ist. Ansonsten müssen ebenfalls zusätzliche Winkelstücke eingesetzt werden. Bei einer Druckbelastung des balligen großen Seitenwand-Abschnitts wölbt sich der flache Seitenwand-Abschnitt nach innen. Dies kann bei Rohrverbindungen zu Undichtheiten führen, da der Kontakt zur Innenkontur des rohrverbindenden Elementes, in der Regel also einer Verbindungsmuffe oder eines Winkelstückes, verloren gehen kann. Ein weiterer Nachteil liegt darin, dass nur eine Verlegeposition vorgegeben ist. Diese muss zwingend eingehalten werden, damit die angepassten Befestigungselemente einsetzbar sind, z.B. bei einer Boden- oder Deckenfixierung. Außerdem beeinträchtigt eine ungünstige Teilung der Wellenberge die Biegbarkeit.

Aus der DE 10 2008 013 013 A1 ist ein Wärmetauscherrohr bekannt, das aus einem glatten Innenrohr und daran angebrachten schraubenlinienförmigen Kanälen besteht, die als Doppelhelix ausgebildet sein können. Die Kanäle dienen zum Transport eines Wärmeträgermediums. Das gesamte Rohr dient als Wärmetauscher. Damit es diese Funktion optimal erfüllen kann, muss es aus Metall bestehen.

Aus der EP 2 620 683 A1 ist ein Verbundrohr für Klima- und Lüftungstechnik bekannt, das oval ausgebildet ist und umlaufend angeordnete Wellenberge aufweist. Zwischen benachbarten Wellenbergen sind durchgehend mit einem Innenrohr verschweißte Wellentäler ausgebildet. Weiterhin sind zwischen benachbarten Wellenbergen Wellental-Abschnitte ausgebildet, die nur über einen Teilbereich mit dem Innenrohr verschweißt sind. Durch diese Ausgestaltung soll erreicht werden, dass das Verbundrohr auch dann, wenn es relativ breit ausgebildet ist, mit relativ engem Krümmungsradius um die kleine Haupt-Achse gebogen werden kann.

Der Erfindung liegt die Aufgabe zugrunde, ein Verbundrohr für Klima- und Lüftungstechnik der gattungsgemäßen Art so auszugestalten, dass eine hohe Biegefähigkeit sowohl um die große Achse als auch um die kleine Achse gegeben ist, ohne dass eine Verformung des Querschnitts des Verbundrohres erfolgt.

Diese Aufgabe wird erfindungsgemäß durch die Merkmale im Kennzeichnungsteil des Anspruches 1 gelöst. Durch die symmetrische Ausgestaltung der großen Seitenwand-Abschnitte wird erreicht, dass keine Vorgabe der Verlegeposition gegeben ist. Die im Vergleich zur Teilung der Wellenberge geringe Profilhöhe verbessert das Biegeverhalten um die große Achse und die kleine Achse. Durch die leicht ballige Ausformung der Auflageflächen, also der großen Seitenwand-Abschnitte, wird ein Beulen nach innen in Richtung des inneren Luftkanals vermieden, sobald eine Druckbelastung von außen auf das Rohr einwirkt.

Die Unteransprüche geben zum Teil erfinderische Weiterbildungen an, die die erreichten Effekte unterstützen bzw. verbessern.

Weitere Merkmale, Vorteile und Einzelheiten der Erfindung ergeben sich aus der nachfolgenden Beschreibung eines Ausführungsbeispiels der Erfindung anhand der Zeichnung. Es zeigt:

Fig. 1    ein Kunststoff-Rohr nach der Erfindung in Draufsicht,

Fig. 2    eine Querschnitts-Darstellung des Kunststoff-Rohres entsprechend der Schnittlinie II-II in Fig. 1 und

Fig. 3    einen Teil-Längsschnitt durch das Kunststoff-Rohr in vergrößerter Darstellung.

Das in der Zeichnung dargestellte Kunststoff-Rohr ist als Verbundrohr, d. h. als doppelwandiges Wellrohr ausgebildet, das aus einem im Wesentlichen glatten Innenrohr 1 und einem gewellten Außenrohr 2 gebildet ist.

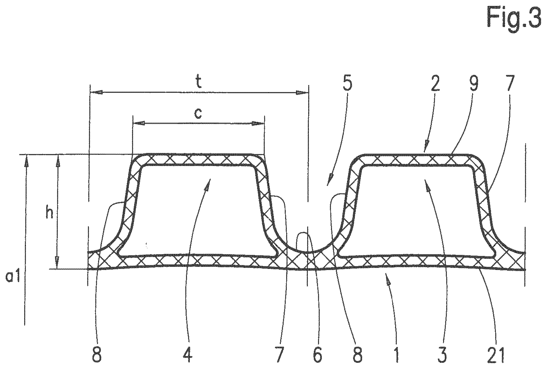

Das Außenrohr 2 ist als Wellrohr ausgebildet, d. h. es besteht im Wesentlichen aus aufeinanderfolgenden Wellenbergen 3, 4. Zwischen jeweils zwei einander benachbarten Wellenbergen 3, 4 befindet sich ein Wellental 5, das benachbart zum Innenrohr 1 von einem Wellenfuß 6 begrenzt wird, der die Flanken 7, 8 der benachbarten Wellenberge 3, 4 miteinander verbindet. Der Wellenfuß 6 ist mit dem Innenrohr 1 verschweißt, wie insbesondere aus Fig. 3 hervorgeht. Die Flanken 7, 8 jedes einzelnen Wellenberges 3 bzw. 4 sind durch eine äußere Ringfläche 9 miteinander verbunden. Die Wellenberge 3, 4 samt Wellenfuß 6, Flanken 7, 8 und äußeren Ringflächen 9 bilden das Außenrohr 2.

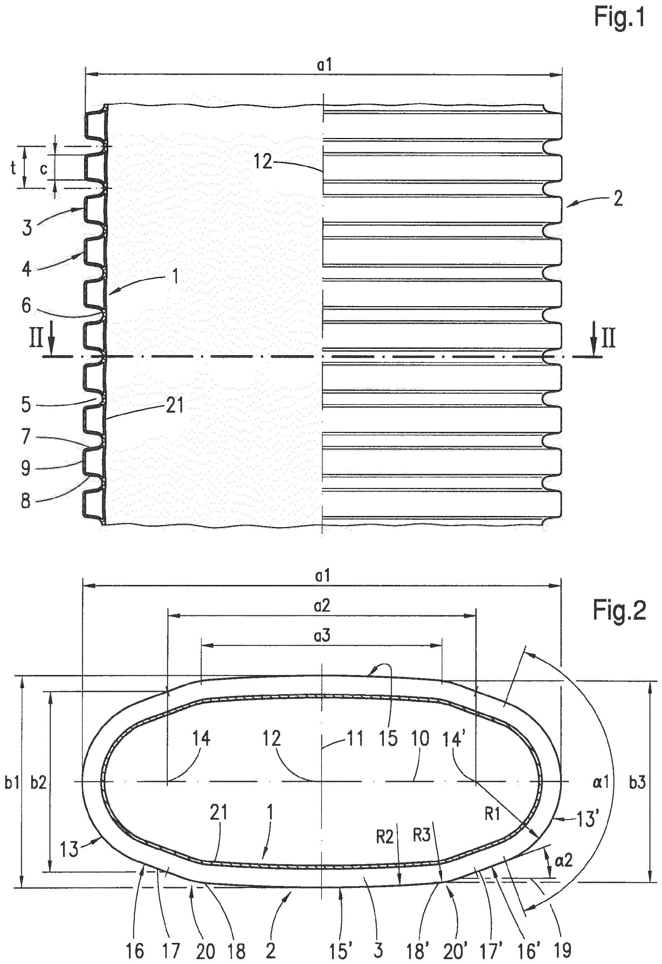

Das Verbundrohr ist doppeltsymmetrisch ausgebildet und weist in der Querschnittsdarstellung gemäß Fig. 2 zwei senkrecht aufeinanderstehende, sich also senkrecht schneidende Achsen auf, nämlich eine große Achse 10 und eine kleine Achse 11. Sie schneiden sich in der Mittel-Längs-Achse 12 des Rohres. Das Rohr ist im Querschnitt also symmetrisch sowohl zur großen Achse 10 als auch zur kleinen Achse 11 ausgebildet.

Zugeordnet zu den beiden Achsen 10, 11 weist das Rohr einen großen Außen-Durchmesser a1 und einen kleinen Außen-Durchmesser b1 auf. Für das Verhältnis von a1 zu b1 gilt: 1,5 <= a1/b1 <= 3,5.

Am jeweiligen Ende der großen Achse 10 weist das Rohr zwei einander gegenüberliegende kleine teilkreisförmige Seitenwand-Abschnitte 13, 13' auf. Diese sind symmetrisch zur großen Achse 10 angeordnet und erstrecken sich über einen Winkel α1, für den gilt: 30° <= α1 <= 140°. Die teilkreisförmigen Seitenwand-Abschnitte 13, 13' haben einen Krümmungsradius R1, der am Schnittpunkt mit der großen Achse 10 als dem Mittelpunkt 14, 14' der teilkreisförmigen Seitenwand-Abschnitte 13, 13' beginnt und sich bis zur Ringfläche 9, also dem Außenumfang des Rohres, erstreckt.

An den Enden der kleinen Achse 11 und ebenfalls symmetrisch zu dieser ist das Rohr mit zwei ballig ausgebildeten, also nur leicht gekrümmten großen Seitenwand-Abschnitten 15, 15' versehen, die einen Krümmungsradius R2 aufweisen. Diese großen Seitenwand-Abschnitte 15, 15' bilden die Auflagefläche des Rohres auf einem Untergrund, auf dem das Rohr verlegt wird. Die jeweils einem großen Seitenwand-Abschnitt 15, 15' zugeordneten Krümmungs-Radien R2 schneiden sich auf der kleinen Achse 11 außerhalb des Rohres. Es gilt: 80 >= R2/R1 >= 8.

Die kleinen teilkreisförmigen Seitenwand-Abschnitte 13, 13' und die großen teilkreisförmigen Seitenwand-Abschnitte 15, 15' sind mittels Übergangs-Abschnitten 16, 16' miteinander verbunden. Diese Übergangs-Abschnitte 16, 16' bestehen jeweils aus einem geradlinigen tangential aus dem kleinen teilkreisförmigen Seitenwand-Abschnitt 13, 13' ausmündenden geradlinigen Teil-Abschnitt 17, 17' und einem Teil-Kreis-Abschnitt 18, 18' mit einem Krümmungs-Radius R3. Der geradlinige Teil-Abschnitt 17, 17' schließt jeweils mit einem parallel zur großen Achse 10 verlaufenden Schenkel 19 einen Winkel α2 ein. Es gilt: 2x α2 + α1 = 180°. Der relativ kleine Teil-Kreis-Abschnitt 18, 18' des Übergangs-Abschnitts 16, 16' geht stetig, also ohne Knickstelle, in den geradlinigen Teil-Abschnitt 17, 17' und den großen Seitenwand-Abschnitt 15, 15' über. An diesen Übergangsstellen 20, 20' weist das Rohr eine Dicke b3 parallel zur kleinen Achse 11 auf, wobei gilt: 0,99 >= b3/b1 >= 0,92.

Das Rohr weist in Richtung der großen Achse 10 eine Erstreckung a2 von Mittelpunkt 14 zu Mittelpunkt 14' auf. An den durch das Maß a2 definierten Stellen des Außenumfangs des Rohres, also der Ringfläche 9 der Wellenberge 3, 4, weist das Rohr eine Dicke b2 auf. Diese Dicke b2 ist noch im Bereich des geradlinigen Teil-Abschnitts 17, 17' des Übergangs-Abschnitts 16, 16', wie Fig. 2 entnehmbar ist. Wie ebenfalls Figur 2 entnehmbar ist, weisen die großen Seitenwand-Abschnitte 15, 15' parallel zur großen Achse 10 eine Erstreckung a3 auf.

Für das Verhältnis von b2 zu b1 gilt: 0,4 <= b2/b1 <= 0,9.

Für das Verhältnis von a3 zu a1 gilt: 0,65 >= a3/a1 >= 0,5.

Wie aus Fig. 3 hervorgeht, ist die Profilhöhe h von der Innenseite des Rohres 1 bis zur Außenseite der Ringfläche 9 kleiner als die Teilung t von der Mitte des Wellenfußes 6 zur Mitte des benachbarten Wellenfußes 6. Auch die Breite c der Ringfläche 9 des jeweiligen Wellenberges 3, 4 ist bezogen auf die Profilhöhe h verhältnismäßig groß. Es gilt: c >= h. Hierdurch wird die Flexibilität, also die Biegbarkeit des Rohres, um die große Achse 10 und die kleine Achse 11 verbessert.

Die Herstellung des Verbundrohres erfolgt in der für gewellte Verbundrohre aus Kunststoff üblichen Art und Weise, wie sie beispielsweise in der EP 0 563 575 (C) dargestellt und beschrieben ist. Es kann zweckmäßig sein, wenn das Innenrohr 1 aus einem weicher eingestellten Kunststoff gebildet wird als das Außenrohr 2. Weiterhin kann die Innenwand 21 des Innenrohres 1 mit einem Antistatikum ausgerüstet sein, wodurch statische Aufladungen aufgrund der Luftströmung an der Innenwand 21 vermieden werden. Derartige statische Aufladungen können zu Schmutzablagerungen führen. Weiterhin kann das Rohr mit flammhemmenden Additiven ausgerüstet sein, was insbesondere von Vorteil ist, wenn es oberhalb abgehängter Decken verlegt wird.

## Patentansprüche

1. Verbundrohr aus Kunststoff für Klima- und Lüftungstechnik

   - mit einem glatten Innenrohr (1),
   - mit einem gewellten Außenrohr (2), das

      -- jeweils aus zwei Flanken (7, 8) und einer diese miteinander verbindenden äußeren Ringfläche (9) gebildete Wellenberge (3, 4) und

      -- jeweils zwischen einander unmittelbar benachbarten Wellenbergen (3, 4) Wellentäler (5) aufweist, die zum Innenrohr (1) durch die Wellenberge (3, 4) miteinander verbindende Wellenfüße (6) begrenzt sind, wobei die Wellenfüße (6) über den Umfang des Verbundrohres mit dem Innenrohr (1) verschweißt sind, und wobei die Wellenberge (3, 4) eine Profilhöhe h und eine Teilung t von der Mitte eines Wellenfußes (6) zur Mitte des unmittelbar benachbarten Wellenfußes (6) aufweisen

   - mit einander gegenüberliegenden großen Seitenwand-Abschnitten (15, 15'), von denen ein großer Seitenwand-Abschnitt (15) nach außen gekrümmt ausgebildet ist,
   - mit die großen Seitenwand-Abschnitte (15, 15') miteinander verbindenden, einander gegenüberliegenden, teilkreisförmig mit einem Krümmungsradius R1 nach außen gekrümmt ausgebildeten kleinen Seitenwand-Abschnitten (13, 13'),
- mit einer kleinen Achse (11), die die großen Seitenwand-Abschnitte (15, 15') durchdringt, wobei die kleinen Seitenwand-Abschnitte (13, 13') spiegelsymmetrisch zur kleinen Achse (11) angeordnet sind, und
- mit einer großen Achse (10), die die kleinen Seitenwand-Abschnitte (13, 13') durchdringt,

**dadurch gekennzeichnet,**

- **dass** beide großen Seitenwand-Abschnitte (15, 15') nach außen gekrümmt ausgebildet und spiegelsymmetrisch zur großen Achse (10) angeordnet sind und jeweils symmetrisch zur kleinen Achse (11) ausgebildet sind und
- **dass** die kleinen Seitenwand-Abschnitte (13, 13') und die großen Seitenwand-Abschnitte (15, 15') jeweils mittels eines Übergangs-Abschnitts (16, 16') miteinander verbunden sind, wobei die Übergangs-Abschnitte (16, 16') jeweils aus einem aus dem jeweiligen kleinen Seitenwand-Abschnitt (13) ausmündenden geradlinigen Teil-Abschnitt (17, 17') und einem den jeweiligen geradlinigen Teil-Abschnitt (17, 17') mit dem zugeordneten großen Seitenwand-Abschnitt (15, 15') verbindenden Teil-Kreis-Abschnitt (18, 18') gebildet sind, und
- **dass** für die Profilhöhe h und die Teilung t der Wellenberge (3, 4) gilt: h <= t

2. Verbundrohr nach Anspruch 1, **dadurch gekennzeichnet, dass** jeder kleine Seitenwand-Abschnitt (13, 13') stetig in den jeweiligen geradlinigen Teil-Abschnitt (17, 17') übergeht.

3. Verbundrohr nach Anspruch 1 oder 2, **dadurch gekennzeichnet, dass** jeder kleine Seitenwand-Abschnitt (13, 13') sich über einen Winkel $\alpha 1$ erstreckt, für den gilt: $30° <= \alpha 1 <= 140°$.

4. Verbundrohr nach einem der Ansprüche 1 bis 3, **dadurch gekennzeichnet, dass** jeder geradlinige Teil-Abschnitt (17, 17') mit einem parallel zur großen Achse (10) verlaufenden Schenkel (19) einen Winkel $\alpha 2$ einschließt, wobei gilt: $2x \alpha 2 + \alpha 1 = 180°$.

5. Verbundrohr nach einem der Ansprüche 1 bis 4, **dadurch gekennzeichnet, dass** das Außenrohr (2) einen großen Außen-Durchmesser a1 und einen kleinen Außen-Durchmesser b1 aufweist, für die gilt:

$$1,5 <= a1/b1 <= 3,5.$$

6. Verbundrohr nach einem der Ansprüche 1 bis 5, da-

**durch gekennzeichnet,**
**dass** die äußeren Ringflächen (9) der Wellenberge (3, 4) eine Breite c in Richtung der Mittel-Längs-Achse (12) aufweisen, wobei gilt:

$$c >= h.$$

7. Verbundrohr nach Anspruch 1, **dadurch gekennzeichnet, dass** die großen Seitenwand-Abschnitte (15, 15') teilkreisförmig mit einem Krümmungsradius R2 ausgebildet sind, wobei für das Verhältnis der Krümmungsradien R1 und R2 gilt:

$$80 >= R2/R1 >= 8.$$

**Claims**

1. A composite pipe made of plastic for air conditioning and ventilation technology

   - with a smooth inner pipe (1),
   - with a corrugated outer pipe (2), which has

      -- corrugation crests (3, 4) each formed by two flanks (7, 8) and an outer annular surface (9) connecting them to each other, and
      -- in each case between directly adjacent corrugation crests (3, 4) has corrugation troughs (5) which are bounded to the inner pipe (1) by corrugation feet (6) connecting the corrugation crests (3, 4) to one another, wherein the corrugation feet (6) are welded to the inner pipe (1) along the circumference of the composite pipe, and wherein the corrugation crests (3, 4) have a profile height h and a pitch t from the center of one corrugation foot (6) to the center of the immediately adjacent corrugation foot (6)

   - with opposing large side wall portions (15, 15'), of which one large side wall portion (15) is formed to be curved outwardly,
   - with small side wall portions (13, 13') connecting the large side wall portions (15, 15') to one another, which are opposing one another and are formed in a part-circle shape with an outwardly curved radius of curvature R1,
   - with a small axis (11) passing through the large side wall portions (15, 15'), wherein the small side wall portions (13, 13') are arranged in mirror symmetry with respect to the small axis (11), and
   - with a large axis (10) passing through the small side wall portions (13, 13'),

   **characterized in that**

- both large side wall portions (15, 15') are formed to be curved outwardly and are arranged in mirror symmetry with respect to the large axis (10) and are each formed symmetrically with respect to the small axis (11), and
- that the small side wall portions (13, 13') and the large side wall portions (15, 15') are each connected to one another by means of a transition portion (16, 16'), wherein the transition portions (16, 16') are each formed from a rectilinear partial portion (17, 17') opening out of the respective small side wall portion (13) and a part-circular portion (18, 18') connecting the respective rectilinear partial portion (17, 17') to the associated large side wall portion (15, 15'), and
- that for the profile height h and the pitch t of the corrugation crests (3, 4) the following applies: h <= t.

2. A composite tube according to claim 1, **characterized in that** each small side wall portion (13, 13') merges continuously into the respective rectilinear partial portion (17, 17').

3. A composite pipe according to claim 1 or 2, **characterized in that** each small side wall portion (13, 13') extends over an angle $\alpha 1$ for which the following applies: $30° <= \alpha 1 <= 140°$.

4. A composite pipe according to any one of claims 1 to 3, **characterized in that** each rectilinear partial portion (17, 17') includes an angle $\alpha 2$ with a leg (19) parallel to the large axis (10), wherein: $2x\ \alpha 2 + \alpha 1 = 180°$.

5. A composite pipe according to any one of claims 1 to 4, **characterized in that** the outer pipe (2) has a large outer diameter a1 and a small outer diameter b1 for which the following applies: $1.5 <= a1/b1 <= 3.5$.

6. A composite pipe according to any one of claims 1 to 5, **characterized in that** the outer annular surfaces (9) of the corrugation crests (3, 4) have a width c in the direction of the central longitudinal axis (12), wherein:

$$c >= h.$$

7. A composite pipe according to claim 1, **characterized in that** the large side wall portions (15, 15') are formed in a part-circle shape with a radius of curvature R2, wherein the following applies to the ratio of the radii of curvature R1 and R2:

$$80 >= R2/R1 >= 8.$$

## Revendications

1. Tube composite en plastique pour la technique de climatisation et d'aération

   - avec un tube intérieur (1) lisse,
   - avec un tube extérieur (2) ondulé qui présente

     -- des crêtes d'onde (3, 4) formées chacune par deux flancs (7, 8) et une surface annulaire extérieure (9) les reliant entre eux, et
     -- les crêtes d'onde (3, 4) directement voisines présentent des creux d'onde (5) qui sont limités vers le tube intérieur (1) par des pieds d'onde (6) reliant les crêtes d'onde (3, 4) entre elles, les pieds d'onde (6) étant soudés au tube intérieur (1) sur la circonférence du tube composite, et les crêtes d'onde (3, 4) présentant une hauteur de profil h et un pas t du centre d'un pied d'onde (6) au centre du pied d'onde (6) directement voisin

   - avec de grandes sections de paroi latérale (15, 15') opposées, dont une grande section de paroi latérale (15) est conçue à être incurvée vers l'extérieur,
   - avec de petites sections de paroi latérale (13, 13') qui relient les grandes sections de paroi latérale (15, 15') entre elles, sont opposées les unes aux autres et sont conçues sous forme de demi-cercle, courbées vers l'extérieur, avec un rayon de courbure R1,
   - avec un petit axe (11) passant par les grandes sections de paroi latérale (15, 15'), les petites sections de paroi latérale (13, 13') étant disposées en symétrie miroir par rapport au petit axe (11), et
   - avec un grand axe (10) passant par les petites sections de paroi latérale (13, 13'),

   **caractérisé en ce**

   - **que** les deux grandes sections de paroi latérale (15, 15') sont incurvées vers l'extérieur et sont disposées en symétrie miroir par rapport au grand axe (10) et sont chacune symétrique par rapport au petit axe (11), et
   - **que** les petites sections de paroi latérale (13, 13') et les grandes sections de paroi latérale (15, 15') sont chacune reliées les unes aux autres au moyen d'une section de transition (16, 16'), dans laquelle les sections de transition (16, 16') sont formées chacune d'une section partielle rectiligne (17, 17') s'ouvrant hors de la petite section de paroi latérale respective (13) et d'une section circulaire partielle (18, 18') reliant la section partielle rectiligne respective (17, 17') à la grande section de paroi latérale (15, 15') associée, et

- **que** pour la hauteur de profil h et le pas t des crêtes d'onde (3, 4) le suivant s'applique : h <= t.

2. Tube composite selon la revendication 1, **caractérisé en ce que** chaque petite section de paroi latérale (13, 13') se fond de manière continue dans la section partielle rectiligne (17, 17') respective.

3. Tube composite selon la revendication 1 ou 2, **caractérisé en ce que** chaque petite section de paroi latérale (13, 13') s'étend sur un angle $\alpha 1$ pour lequel s'applique : 30° <= $\alpha 1$ <= 140°.

4. Tube composite selon l'une quelconque des revendications 1 à 3, **caractérisé en ce que** chaque section partielle rectiligne (17, 17') comprend un angle $\alpha 2$ avec une branche (19) s'étendant parallèlement au grand axe (10), dans lequel s'applique : 2x $\alpha 2$ + $\alpha 1$ = 180°.

5. Tube composite selon l'une quelconque des revendications 1 à 4, **caractérisé en ce que** le tube extérieur (2) a un grand diamètre extérieur al et un petit diamètre extérieur b1 pour lesquels s'applique ce qui suit :

$$1{,}5 <= a1/b1 <= 3{,}5.$$

6. Tube composite selon l'une quelconque des revendications 1 à 5, **caractérisé en ce que** les surfaces annulaires extérieures (9) des crêtes d'ondes (3, 4) ont une largeur c dans la direction de l'axe longitudinal central (12), dans lequel s'applique : c >= h.

7. Tuyau composite selon la revendication 1, **caractérisé en ce que** les grandes sections de paroi latérale (15, 15') ont la forme d'un cercle partiel avec un rayon de courbure R2, le rapport des rayons de courbure R1 et R2 étant le suivant :

$$80 >= R2/R1 >= 8.$$

Fig.1

a1

t c

12

2

3

4

1

6

II II

5

7

21

9

8

a1

a2

a3

Fig.2

14  12  11  15  10  14'

b1 b2

21  1

13

R2  R3  R1

α1  b3

13'

α2

16  17  20  18  2  15'  3  18'  20'  17'  16'  19

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2431642 A2
- DE 102008013013 A1
- EP 2620683 A1
- EP 0563575 C